# EUROPÄISCHE PATENTSCHRIFT

(11) **EP 1 848 006 B1**
(45) Veröffentlichungstag und Bekanntmachung des Hinweises auf die Patenterteilung: **10.09.2014**
(21) Anmeldenummer: 07105608.9
(22) Anmeldetag: 04.04.2007
(51) Int. Cl.: H01B 7/18, H01B 7/29, C09J 7/02, H02G 3/04

(54) **Klebeband zum Ummanteln von langgestrecktem Gut, Verwendung dieses Klebebandes sowie Kabelbaum mit diesem Klebeband**
Adhesive tape for sheathing elongated goods, application of this adhesive tape and harness with this adhesive tape
Bande de colle destinée à l'enrobage de biens allongés, utilisation de cette bande de colle tout comme faisceau de câble doté de cette bande de colle

(30) Priorität: 20.04.2006 DE 102006018708
(43) Veröffentlichungstag der Anmeldung: 24.10.2007
(73) Patentinhaber: Coroplast Fritz Müller GmbH & Co. KG, 42279 Wuppertal (DE)
(72) Erfinder: Lodde, Christoph, 44229 Dortmund (DE); Frigge, Christoph, 45549 Sprockhövel (DE)
(74) Vertreter: Patentanwälte Dr. Solf & Zapf

(56) Entgegenhaltungen:
- EP-A1- 1 184 436
- EP-A2- 1 094 098
- EP-A2- 1 132 927
- EP-A2- 1 312 657
- DE-A1- 10 149 975

## Beschreibung

Die Erfindung betrifft ein Klebeband zum Ummanteln von langgestrecktem Gut, wie Kabelsätzen, Kunststoffprofilen od. dgl., mit einem eine Polypropylen-Folie umfassenden bandförmigen Träger, der mindestens auf einer Seite mit einer selbstklebenden Klebeschicht versehen ist, die aus einem Haftklebstoff besteht.

Des Weiteren betrifft die Erfindung die Verwendung eines solchen Klebebandes sowie einen Kabelbaum, umfassend mehrere, jeweils mit einer Isolierung versehene, insbesondere elektrische, Leitungen und ein Klebeband, mit dem diese Leitungen umwickelt sind.

Ein Klebeband der genannten Art ist jeweils aus der EP-A-1 132 927 und der EP-A-1 094 098 bekannt. Diese Dokumente beschäftigen sich insbesondere mit der Verwendung eines solchen Klebebandes als Bandagierungsband für Kabel. Es wird in dem Dokument EP-A-1 132 927 ausgeführt, dass elektrische und elektromechanische Bauteile sowie die Umhüllungen von elektrischen Leitungen vielfach aus polymeren Werkstoffen bestehen, wobei PVC historisch bedingt aufgrund seiner Verfügbarkeit sowie seiner exzellenten Werkstoff- und Isolationseigenschaften den wichtigsten Kunststoff darstellt. Für den mechanischen und elektrischen Schutz derartiger PVC-Kabel sind Selbstklebebänder entwickelt worden, wie auch allgemein für den Schutz und zur Isolierung sowie zum Bandagieren von elektrischen Leitungen und Bauteilen in erheblichem Umfang Selbstklebebänder eingesetzt werden. Diese Klebebänder erlauben es, einen Langzeitverbund herzustellen, ohne dass durch Wechselwirkungen zwischen Klebeband und Kabelumhüllung Schäden an dem Kabel auftreten. Zur Bündelung von Kabelsätzen werden die einzelnen Leitungen dabei mit den Klebebändern umwickelt, wobei dies je nach Ausführungsform meist noch einen zusätzlichen Nutzen bietet, wie z. B. die Dämpfung unerwünschter Vibrations- und/oder Klappergeräusche, einen Feuchtigkeitsschutz oder einen erhöhten Abriebschutz.

In Bezug auf PVC wird in der EP-A-1 132 927 insbesondere ausgeführt, dass die Additive in weichmacherhaltigem PVC zur Migration neigen und daher speziell abgestimmte Klebebänder erfordern. Wenn Kabelumhüllung und Klebebänder nicht in geeigneter Weise aufeinander abgestimmt sind, können sich sonst während des Produktlebens durch Unverträglichkeiten Schädigungen der Kabel einstellen, die unter der Wirkung der Additive beispielsweise bis hin zu einer extremen Versprödung führen, wobei Korrosion und Kurzschlüsse mit der Gefahr des Ausfalls der gesamten Elektrik bzw. Elektronik mögliche Folgen darstellen.

In der EP 1 094 098 A2 werden für die Herstellung der Klebeschicht Acrylate beschrieben, die in Dispersionen aufgretragen werden, welche insbesondere von 0 % bis 10 % Acrylsäure-Einheiten, von 0 % bis 100 % n-Butylacrylat-Einheiten und von 0 % bis 100 % 2-Ethylhexylacrylat-Einheiten enthalten können. Wechselwirkungen der Klebeschicht, insbesondere solche, wie sie beim Bandagieren von elektrischen Leitungen mit den Leitungsisolationen der Kabel oder deren Bestandteilen, wie Weichmachern, auftreten können, werden nicht erwähnt.

Weichmacher werden Kunststoffen zugemischt, um deren Verwendbarkeit und Handhabbarkeit zu verbessern. Insbesondere werden PVC Weichmacher zugesetzt, um eine erhöhte Flexibilität zu erreichen. Die Weichmacher gehen dabei keine chemische Verbindung mit dem PVC ein und können daher mehr oder weniger stark in die Umgebung migrieren. Die am häufigsten eingesetzten Weichmacher stammen aus der Gruppe der Phthalsäureester. Vorzugsweise handelt es sich dabei um Di-2-(ethylhexyl)-phthalat (DEHP), Di-n-Butylphthalat (DBP), Butylbenzylphthalat (BBP) und Diethylphthalat. DEHP stellt den wichtigsten Weichmacher auf Phthalsäurebasis dar, der für PVC eingesetzt wird. Weich-PVC-Produkte können bis zu 60 % DEHP enthalten, Anwendungen als Beschichtung sogar noch mehr. Als Weichmacher für Fahrzeugleitungen kommen insbesondere DEHP, Di-iso-undecylphthalat (DIUP) oder Trimellitatester zum Einsatz.

In der EP-A-1 132 927 wird zum bekannten Stand der Technik weiter ausgeführt, dass sich bei den speziell auf PVC-Kabelisolierungen abgestimmten Klebebändern besonders Klebebänder mit einem PVC-Folienträger durchgesetzt haben, da diese zum Einen die erforderlichen mechanischen Eigenschaften aufweisen, zum Anderen aber auch geringe Kompatibilitätsprobleme aufwerfen, da zumindest Träger und Haftgrund aus demselben Material bestehen. Die aufgezeigte mit dem PVC-Einsatz verbundene Problematik wird dann gemäß der EP-A-1 132 927 jedoch insofern umgangen, als bei der beanspruchten Verwendung die Kabel eine Ummantelung aufweisen sollen, die frei von Polyvinylchlorid (PVC) ist.

Da bei Personenkraftwagen oder Lastkraftwagen im Passagierraum Spitzentemperaturen bis zu 100 °C und im Motorraum noch weit höhere Dauertemperaturen auftreten können, stellt eine wichtige Prüfgröße elektrischer Leitungen und weiterer Komponenten für Kabelsätze die Temperaturbeständigkeit dar, wobei in Bezug auf die chemische Zusammensetzung der Prüfobjekte festzustellen ist, dass die erwähnte Migration der Weichmacher mit steigender Temperatur und damit verbunden eventuelle Kompatibilitätsprobleme zunehmen, wodurch die Temperaturbeständigkeit sinkt. Die elektrischen Leitungen und weiteren Komponenten der Kabelsätze, wie die Kabelisolationen, werden daher in der Automobilindustrie zur Festlegung ihrer maximalen Dauergebrauchstemperatur in Temperaturklassen eingeteilt.

Zum Nachweis der Erfüllung der bestehenden Anforderungen durch einen Werkstoff sind verschiedene Prüfungen und Tests vorgeschrieben, die u. a. in einer, unter verschiedenen Pkw-Herstellern abgestimmten Werksnorm zusammengefaßt sind (LV 112 - Niederspannungsleitungen für Kraftfahrzeuge). Entsprechend dieser Norm muss der Isolationswerkstoff der Leitungen den Anforderungen der VDA 231-106 entsprechen. Die minimale und maximale Dauergebrauchstemperatur (T_{U} und T_{O}) für eine Beanspruchungsdauer von 3000 Stunden liegen beispielsweise bei einer Einordnung in die Temperaturklasse B bei - 40 °C und bei 100 °C (für PVC als Isolationsmaterial bei 105 °C), wobei das Material einer Kurzzeittemperatur (240 Stunden) von 125 ± 3 °C und einer Überlasttemperatur (6 Stunden) von 150 ± 3 °C standhalten muss. Der größte Anteil der Leitungen ist dabei für Temperaturbereiche bis 105 °C oder 125 °C, also die Temperaturklassen A bis C, zugelassen.

Auf der Grundlage dessen wird erfindungsgemäß unter "temperaturbeständig" verstanden, dass das Material die in der o. g. Norm genannten und in der nachstehenden Tabelle 1 wiedergegebenen Anforderungen mindestens der Temperaturklassen A bis C erfüllt.

**Tabelle 1**

| Klasse | Dauergebrauchstemperatur | Kurzzeittemperatur | Temperatur für thermische Überlast |
|---|---|---|---|
| | T_{U} bis T_{O} in °C | (T_{O} + 25) °C | (T_{O} + 50) °C |
| A | - 40 bis 85 | 110 ± 2 | 135 ± 3 |
| B | - 40 bis 100 | 125 ± 3 | 150 ± 3 |
| C | - 40 bis 125 | 150 ± 3 | 175 ± 3 |
| D | - 40 bis 150 | 175 ± 3 | 200 ± 3 |
| E | - 40 bis 175 | 200 ± 3 | 225 ± 3 |
| F | - 40 bis 200 | 225 ± 4 | 250 ± 4 |
| G | - 40 bis 225 | 250 ± 4 | 275 ± 4 |
| H | - 40 bis 250 | 275 ± 4 | 300 ± 4 |

In der Automobilindustrie werden für Leitungssätze im Motorraum zunehmend Leitungen mit Isolierungen der Temperaturklasse C (Dauergebrauchstemperatur nach LV 112 = 125 °C) eingesetzt. Die Kombination solcher Leitungen auf Basis von vernetztem Polyethylen (X-PE) oder Polypropylen (PP) mit PVC-Wickelbändern kann zu Kompatibilitätsproblemen führen und wird daher allgemein nicht empfohlen. Weichmacher aus dem PVC-Träger des Bandes und/oder dem Klebstoff können in die Leitungsisolation wandern und diese schädigen. Aus diesem Grund werden hier überwiegend textile Klebebänder eingesetzt. So wird u. a. in der EP-A-1 132 927 darauf hingewiesen, dass bekannte PVC-Wickelbänder zu Inkompatibilitäten mit Leitungen führen, deren Isolierungen aus Polypropylen bestehen.

Der vorliegenden Erfindung liegt die Aufgabe zu Grunde, ein Klebeband der eingangs genannten Art sowie einen Kabelbaum, der aus einem mit einem derartigen Klebeband umwickelten Kabelsatz besteht, zu schaffen, die bei Vorhandensein sowohl halogenhaltiger als auch halogenfreier Kabelisolationen einen temperaturstabilen Langzeitverbund gewährleisten, bei dem durch die Wechselwirkungen zwischen Klebeband und Kabelumhüllung keine Schäden auftreten - seien sie an den Kabeln bzw. elektrischen Leitungen oder seien sie am Klebeband.

Erfindungsgemäß wird dies mit einem Klebeband gemäß Anspruch 1 und einem Kabelbaum gemäß Anspruch 20 erreicht. Demgemäß ist vorgesehen, dass der Haftklebstoff eine derartige chemische Zusammensetzung aufweist, dass der Haftklebstoff den Durchtritt von für Kabelisolierungen eingesetzten Weichmachern durch die Klebeschicht unterbindet. Außerdem ist erfindungsgemäß vorgesehen, dass das Polypropylen der Polypropylen-Folie durch Additivierung mit einem Ethylen-Acrylat-Copolymer, mit einem mit Metallocen-Katalysatoren hergestellten Polypropylen und/oder mit Polyethylen modifiziert ist, so dass es eine Weichmacherbeständigkeit bis zu Temperaturen von 100 °C aufweist.

Das erfindungsgemäße Klebeband vereint somit die Vorteile, die Folienklebebänder gegenüber textilen Klebebändern aufweisen, z. B. dass sie keine Feuchtigkeitsaufnahme zeigen, mit dem Vorteil der sich aus der olefinischen Zusammensetzung herleitenden Weichermacherfreiheit und der Eignung zur langzeitstabilen Ummantelung von weichmacherhaltigen, wie aus PVC bestehenden, Kabelisolationen.

Hierbei hat sich erstaunlicherweise bei den einschlägigen Kompatibilitätstests des Klebebandes nach LV 312 gezeigt, dass, wenn der Haftklebstoff ein Acrylatklebstoff der erfindungsgemäßen Zusammensetzung ist, also ein Polymer auf der Basis von Butylacrylat oder 2-Ethylhexylacrylat, bei einer Kombination mit PVC-isolierten Leitungen nicht nur der Klebstoff selbst weichmacherbeständig ist, sondern auch eine sperrende oder puffernde Wirkung entwickelt, die ausreicht, eine Schädigung des Klebebandträgers durch die Weichmacher der Kabelisolation zu verhindern. Die Verhinderung bzw. zumindest Minimierung des Durchtritts der für Kabelisolierungen eingesetzten Weichmacher, wie der erwähnten Phthalsäureester, ist dabei offenbar auf eine Diffusionshemmung und/oder chemische Bindung an den Klebstoff zurückzuführen. Dies ist insofern wichtig, als PVC-Kabel, insbesondere der Temperaturklasse B (100 °C), nach wie vor im Innenraum von Automobilen eingesetzt werden und das erfindungsgemäße Klebeband somit im Mischverbau sowohl für X-PE/PP-Kabel als auch für PVC-Kabel eingesetzt werden kann.

Es ist dabei aufgrund dieser sich einstellenden vorteilhaften Wirkung davon auszugehen, dass durch den erfindungsgemäßen Klebstoffeinsatz nicht nur eine Barriereschicht gegenüber dem Klebebandträger geschaffen wird, sondern möglicherweise sogar auch eine Absorptivschicht, die aus PVC-Isolierungen freigesetzte Weichmacher gewissermaßen von den Kabeln mit X-PE- oder PP-Isolierung wegzieht und so deren thermische Langzeitstabilität erhöht.

Der bandförmige Träger des erfindungsgemäßen Klebebandes kann dabei eine einschichtige Polypropylen-Folie oder auch eine mehrschichtige Polypropylen-Folie, insbesondere eine aus einer Polypropylenschicht und aus einer Polyethylenschicht bestehende Polypropylen-Folie, umfassen. Im Falle eines mindestens dreischichtig aufgebauten bandförmigen Trägers ist es dabei besonders vorteilhaft, wenn die äußeren Schichten aus Polypropylen gebildet sind.

Zur Erzielung eines bestimmten angestrebten Eigenschaftsbildes, beispielsweise zur Einstellung bestimmter mechanischer Eigenschaften, wie Flexibilität oder Shore-Härte, kann dabei mit Vorteil vorgesehen sein, dass das Polypropylen der Polypropylen-Folie durch Zusatz von Ethylen-Acrylat-Copolymeren, von mit Metallocen-Katalysatoren hergestelltem, vorzugsweise in seiner Taktizität gesteuertem, beispielsweise auch flüssigem, Polypropylen (PP-(MC)) und/oder von Polyethylen, insbesondere jeweils in Anteilen von > 0 bis 30 Ma.-%, modifiziert ist.

Ebenfalls optional kann der Träger bedarfsweise flammhemmende Zusätze, wie Antimontrioxid in Kombination mit Brom- oder Chlor-Verbindungen, insbesondere in Anteilen von 0 bis 5 Ma-%, Ammonium-Polyphosphat, insbesondere in Anteilen von 0 bis 20 Ma-%, und/oder Magnesium- oder Aluminiumhydroxid, insbesondere in Anteilen von 0 bis 40 Ma-%, enthalten.

Weitere vorteilhafte Ausgestaltungsmerkmale der Erfindung sind in den Unteransprüchen sowie der folgenden Beschreibung enthalten.

Anhand zweier Ausführungsbeispiele soll im Folgenden die Erfindung näher erläutert werden. Dabei zeigen:
- Fig. 1: einen Schnitt durch ein erfindungsgemäßes technisches Klebeband,
- Fig. 2: eine Ansicht eines erfindungsgemäßen Kabelbaumes.

In den verschiedenen Figuren der Zeichnung sind gleiche Teile stets mit denselben Bezugszeichen versehen, so dass sie in der Regel auch jeweils nur einmal beschrieben werden.

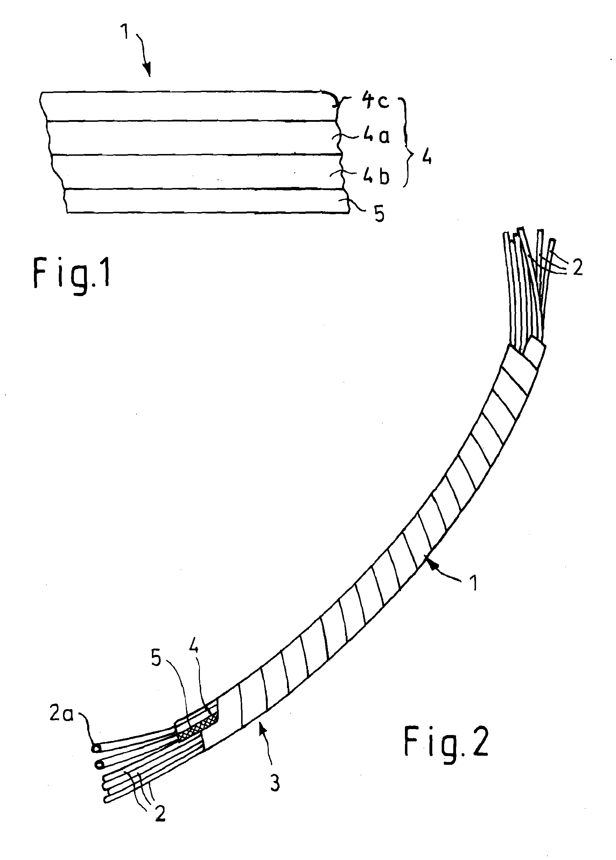

Wie sich zunächst aus Fig. 1 ergibt, umfasst ein erfindungsgemäßes Klebeband 1, das - wie Fig. 2 zeigt - vorzugsweise zum Umhüllen von langgestrecktem Gut, wie insbesondere Leitungen 2 oder Kabelsätzen, zur Bildung eines Kabelbaumes 3 dient, einen bandförmigen Träger 4, der eine Polypropylen-Folie 4a, 4b, 4c umfasst und der auf mindestens einer Seite mit einer selbstklebenden Klebeschicht 5 versehen ist, die aus einem druckempfindlichen Haftklebstoff besteht, welcher als Dispersion, aus der Lösung oder als Schmelzklebstoff aufgebracht sein kann.

In der in Fig. 1 gezeigten Darstellung umfasst der bandförmige Träger 4 insbesondere eine dreischichtige Polypropylen-Folie 4a, 4b, 4c, die aus zwei Polypropylen-Schichten 4a, 4c und aus einer dazwischen liegenden Polyethylenschicht 4b besteht. Diese Darstellung ist nicht beschränkend, denn es könnte erfindungsgemäß auch vorgesehen sein, dass der bandförmige Träger 4 wie im zweiten Ausführungsbeispiel der Erfindung entweder nur eine einschichtige (nur Schicht 4a) oder auch eine in anderer Weise aufgebaute mehrschichtige Polypropylen-Folie umfasst.

Wie sich aus Fig. 2 ergibt, umfasst ein erfindungsgemäßer Kabelbaum 3 mehrere, jeweils mit einer Isolierung 2a versehene, insbesondere elektrische, Leitungen 2 und ein erfindungsgemäßes Klebeband 1, mit dem diese Leitungen 2 umwickelt sind.

Erfindungsgemäß ist vorgesehen, dass der Haftklebstoff der Klebeschicht 5 eine derartige chemische Zusammensetzung aufweist, dass er den Durchtritt von für Kabelisolierungen, wie für die dargestellte Isolierung 2a, eingesetzten Weichmachern durch die Klebeschicht 5 unterbindet. Der Haftklebstoff kann dabei ein Acrylatklebstoff, insbesondere ein Polymer auf der Basis von Butylacrylat oder 2-Ethylhexylacrylat, sein. Bei den Weichmachern kann es sich um solche handeln, wie sie in einer aus PVC bestehenden Isolierung 2a anzutreffen sind, also vorzugsweise um Phthalsäureester, wie Di-2-(ethylhexyl)-phthalat (DEHP), Di-iso-undecylphthalat (DIUP) oder Trimellitatester. Diese Stoffe werden durch den Klebstoff an einer Migration in den Klebebandträger 4 gehindert.

**Tabelle 2**

| Eigenschaft | Prüfnorm | Einheit | V | A | B |
|---|---|---|---|---|---|
| Flächengewicht, Träger | DIN EN 2286 | g/m² | 160 | 80 | 100 |
| Flächengewicht, Klebstoff | DIN EN 2286 | g/m² | 19 | 19 | 19 |
| Dicke | EN 1942 | mm | 0,14 | 0,10 | 0,14 |
| Kraft bei Dehnung - | EN 14410 | N/cm | | | |
| 2% | | | 2 | 2 | 2 |
| 10% | | | 10 | 7 | 8 |
| 250% | | | 28 | 10 | 10 |
| Reißdehnung | EN 14410 | % | 280 | 750 | 750 |
| Bruchkraft | EN 14410 | N/cm | 30 | 23 | 20 |
| Klebkraft, Stahl | EN 1939 | N/cm | 2 | 2 | 2 |
| Klebkraft, Bandrücken | EN 1939 | N/cm | 2 | 2 | 2 |
| Abrollkraft | EN 1944 | N/19 cm | 8 | 5 | 5 |
| Kompatibilität | LV 312 | °C | | | |
| FEP (E) | | | 125 | 125 | 125 |
| PP (C) | | | nein | 125 | 125 |
| X-PE (C) | | | nein | 125 | 125 |
| PVC (C) | | | 105 | 105 | 105 |
| Beständigkeit | LV 312 | °C | nein | 125 | 125 |

Die vorstehende Tabelle 2 enthält die technischen Daten von drei Folien-Kabelwickelbändern, bei denen es sich in der ersten Spalte um ein Vergleichsklebeband V handelt und in den beiden übrigen Spalten um zwei Beispiele A, B für erfindungsgemäße Klebebänder. Das Vergleichsklebeband V ist ein PVC-Standardklebeband. Das Beispiel A für ein erfindungsgemäßes Klebeband 1 besitzt den in Fig. 1 dargestellten mehrschichtigen Aufbau des Trägers 4, während es sich - wie bereits erwähnt - bei Beispiel B um ein erfindungsgemäßes Klebeband 1 mit einschichtigem Träger 4 handelt, der aus einer Polypropylenschicht besteht, die mit einem Polyethylen-AcrylCopolymer modifiziert ist, insbesondere mit einem Copolymer, das unter dem Namen Lotryl® von der Firma Arkema bezogen werden kann.

Im Feld "Kompatibilität" von Tabelle 2 sind mit in Klammern nachgestellter Temperaturklasse jeweils die Werkstoffe der Isolation 2a der Leitungen 2 angegeben, für die der Test mit dem jeweiligen Klebeband erfolgte. Unter "Beständigkeit" ist die Medien- bzw. Chemikalienbeständigkeit zu verstehen, wie sie die Prüfvorschrift LV 312 definiert.

Die erfindungsgemäßen Klebebänder 1 sind sowohl kompatibel mit halogenfreien Leitungen 2 der Temperaturklasse C, z. B. PP-Leitungen der Firmen Draka, Pirelli und Tyco oder X-PE-Leitungen der Firma Acome, als auch kompatibel mit weichmacherhaltigen der Temperaturklasse B, z. B. mit PVC-Leitungen der Firmen Coroplast oder Gebauer & Griller. Darüber hinaus ist auch eine Kompatibilität mit Leitungen 2 gegeben, die eine aus Perfluorethylenpropylen bzw. Tetrafluorethylen-Hexafluorpropylen-Copolymer (FEP) bestehende Isolierung 2a aufweisen.

Die erfindungsgemäßen Klebebänder 1 weisen bei einer Shore A Härte von weniger als 95 eine hohe Anschmiegsamkeit an die Kabel 2 und gute Handreißbarkeit auf, was sie zur Verwendung als Kabelwickelbänder prädestiniert. Die Reißdehnung liegt bei mindestens 450 % und die Bruchkraft im Bereich von 15 bis 30 N/cm. Durch eine Coronabehandlung der Bandoberseite, also der nicht beschichteten Seite des Trägers 4, konnten gute Abrolleigenschaften erzielt werden, wie sich dies in den Werten der Tabelle 2 niederschlägt. Die erfindungsgemäßen Klebebänder können dabei derart ausgerüstet sein, dass sie unter den Testbedingungen der an der ISO 3795 orientierten LV 312 als nicht brennbar bzw. selbstverlöschend klassifiziert werden können.

Die Erfindung ist nicht auf die beschriebenen Ausführungsbeispiele beschränkt, sondern umfasst auch alle im Sinne der Erfindung gleichwirkenden Ausführungen. So können beispielsweise die Grammatur der Klebebeschichtung 5 sowie die Flächengewichte des Trägers 4 von denen der Beispiele abweichen. Der Haftklebstoff in der Klebeschicht 5 sollte aber mit Vorteil mit einem spezifischen Flächengewicht von etwa 5 bis 100 g/m², vorzugsweise von etwa 15 bis 40 g/m², aufgetragen sein, und der Träger 4 sollte mit Vorteil ein Flächengewicht von 40 bis 200 g/m², vorzugsweise von 70 bis 170 g/m², aufweisen.

Insbesondere kann in für die erfindungsgemäße Ausbildung der gewünschten Eigenschaften optimaler Weise auch eine Klebebeschichtung 5 mit einer anderen Zusammensetzung des Haftklebstoffs zur Anwendung kommen, beispielsweise ein Haftklebstoff, der mit dem Weichmacher chemisch reagiert und diesen dadurch bindet, jedoch dabei seine Klebkraft nicht verliert.

### Bezugszeichen

- 1: Klebeband
- 2: Leitung
- 2a: Isolierung von 2
- 3: Kabelbaum
- 4: Träger von 1
- 4a: erste Schicht von 4 (PP)
- 4b: zweite Schicht von 4 (PE)
- 4c: dritte Schicht von 4 (PE)
- 5: Klebebeschichtung auf 4

## Patentansprüche

1. Klebeband (1) zum Ummanteln von langgestrecktem Gut, wie Kabelsätzen (2), Kunststoffprofilen od. dgl., mit einem eine Polypropylen-Folie (4a, 4b, 4c) umfassenden bandförmigen Träger (4), der mindestens auf einer Seite mit einer selbstklebenden Klebeschicht (5) versehen ist, die aus einem Haftklebstoff besteht, und zwar einem Polymer auf der Basis von Butylacrylat oder 2-Ethylhexylacrylat, wodurch der Haftklebstoff eine derartige chemische Zusammensetzung aufweist, dass der Haftklebstoff den Durchtritt von für Kabelisolierungen (2a) eingesetzten Weichmachern durch die Klebeschicht (5) unterbindet, und wobei das Polypropylen der Polypropylen-Folie (4a, 4b, 4c) durch Additivierung mit einem Ethylen-Acrylat-Copolymer, mit einem mit Metallocen-Katalysatoren hergestellten Polypropylen (PP-(MC)) und/oder mit Polyethylen modifiziert ist, so dass es eine Weichmacherbeständigkeit bis zu Temperaturen von 100 °C aufweist.

2. Klebeband (1) nach Anspruch 1,
**dadurch gekennzeichnet, dass** der Haftklebstoff den Durchtritt von PVC-Weichmachern, insbesondere von Phthalsäureestern, wie Di-2-(ethylhexyl)-phthalat, DEHP, oder Di-iso-undecylphthalat, DIUP, oder Trimellitatester, unterbindet.

3. Klebeband (1) nach Anspruch 1 oder 2,
**dadurch gekennzeichnet, dass** der Haftklebstoff als Dispersion, aus der Lösung oder als Schmelzklebstoff aufgebracht ist.

4. Klebeband (1) nach einem der Ansprüche 1 bis 3,
**dadurch gekennzeichnet, dass** der bandförmige Träger (4) eine einschichtige Polypropylen-Folie (4a) umfasst.

5. Klebeband (1) nach einem der Ansprüche 1 bis 3,
**dadurch gekennzeichnet, dass** der bandförmigen Träger (4) eine mehrschichtige Polypropylen-Folie (4a, 4b, 4c) ist, insbesondere eine aus mindestens einer Polypropylenschicht (4a) und aus mindestens einer Polyethylenschicht (4b, 4c) bestehende Polypropylen-Folie (4a, 4b, 4c).

6. Klebeband (1) nach einem der Ansprüche 1 bis 5,
**dadurch gekennzeichnet, dass** in einem/dem mehrschichtig aufgebauten Träger (4), insbesondere in einem mindestens dreischichtig (4a, 4b, 4c) aufgebauten Träger (4), die äußeren Schichten (4b, 4c) aus Polypropylen gebildet sind.

7. Klebeband (1) nach einem der Ansprüche 1 bis 6,
**dadurch gekennzeichnet, dass** das Polypropylen der Polypropylen-Folie (4a, 4b, 4c) durch Zusatz von Ethylen-Acrylat-Copolymer in Anteilen von > 0 bis 30 Ma.-%, modifiziert ist.

8. Klebeband (1) nach einem der Ansprüche 1 bis 7,
**dadurch gekennzeichnet, dass** das Polypropylen der Polypropylen-Folie (4a, 4b, 4c) durch Zusatz von mit Metallocen-Katalysatoren hergestelltem, in seiner Taktizität gesteuertem, beispielsweise flüssigem, Polypropylen (PP-(MC)) in Anteilen von > 0 bis 30 Ma.-%, modifiziert ist.

9. Klebeband (1) nach einem der Ansprüche 1 bis 8,
**dadurch gekennzeichnet, dass** das Polypropylen der Polypropylen-Folie (4a, 4b, 4c) durch Zusatz von Polyethylen in Anteilen von > 0 bis 30 Ma.-%, modifiziert ist.

10. Klebeband (1) nach einem der Ansprüche 1 bis 9,
**dadurch gekennzeichnet, dass** der Träger (4) flammhemmende Zusätze, wie Antimontrioxid in Kombination mit Brom- oder Chlor-Verbindungen, insbesondere in Anteilen von 0 bis 5 Ma-%, Ammonium-Polyphosphat, insbesondere in Anteilen von 0 bis 20 Ma-%, und/oder Magnesium- oder Aluminiumhydroxid, insbesondere in Anteilen von 0 bis 40 Ma-%, enthält.

11. Klebeband (1) nach einem der Ansprüche 1 bis 10,
**dadurch gekennzeichnet, dass** der Träger (4) Füllstoffe, wie Talkum, Kreide und/oder Kaolin, insbesondere in Anteilen von jeweils 0 bis 20 Ma-%, enthält.

12. Klebeband (1) nach einem der Ansprüche 1 bis 11,
**gekennzeichnet durch** eine Reißdehnung von mindestens 450 %.

13. Klebeband (1) nach einem der Ansprüche 1 bis 12,
**gekennzeichnet durch** eine Bruchkraft im Bereich von 15 bis 30 N/cm.

14. Klebeband (1) nach einem der Ansprüche 1 bis 13,
**gekennzeichnet durch** eine Shore-A Härte von weniger als 95.

15. Klebeband (1) nach einem der Ansprüche 1 bis 14,
**gekennzeichnet durch** eine Kompatibilität mit halogenfreien Isolationen (2a) von Leitungen (2) der Temperaturklasse A bis C nach LV 112, z. B. mit polypropylenisolierten elektrischen Leitungen (2) und/oder mit elektrischen Leitungen (2), die eine aus vernetztem Polyethylen bestehende Isolation (2a) aufweisen.

16. Klebeband (1) nach einem der Ansprüche 1 bis 15,
**gekennzeichnet durch** eine Kompatibilität mit weichmacherhaltigen Isolationen (2a) von Leitungen (2) der Temperaturklassen A oder B nach LV 112, z. B. mit PVC-isolierten elektrischen Leitungen (2).

17. Klebeband (1) nach einem der Ansprüche 1 bis 16,
**dadurch gekennzeichnet, dass** der Träger (4) auf seiner nicht beschichteten Seite coronabehandelt ist.

18. Klebeband (1) nach einem der Ansprüche 1 bis 17,
**dadurch gekennzeichnet, dass** der Haftklebstoff in der Klebeschicht (5) mit einem spezifischen Flächengewicht von etwa 5 bis 100 g/m², vorzugsweise von etwa 15 bis 40 g/m², aufgetragen ist.

19. Klebeband (1) nach einem der Ansprüche 1 bis 18,
**dadurch gekennzeichnet, dass** der Träger (4) ein Flächengewicht von 40 bis 200 g/m², vorzugsweise von 70 bis 170 g/m², aufweist.

20. Kabelbaum (3), umfassend mehrere, jeweils mit einer Isolierung (2a) versehene, insbesondere elektrische Leitungen (2) und ein Klebeband (1) nach einem der Ansprüche 1 bis 19, mit dem diese Leitungen (2) umwickelt sind.

21. Kabelbaum (3) nach Anspruch 20,
**gekennzeichnet durch** eine Temperaturbeständigkeit, insbesondere der Isolierung, (2a) gemäß der Temperaturklasse A bis C nach LV 112.

22. Kabelbaum (3) nach Anspruch 20 oder 21,
**dadurch gekennzeichnet, dass** die Isolation (2a) der Leitungen (2) einen Weichmacher, insbesondere einen Phthalsäureester, wie Di-2-(ethylhexyl)-phtalat, DEHP, oder Di-iso-undecylphthalat, DIUP, oder einen Trimellitatester, enthält.

23. Kabelbaum (3) nach einem der Ansprüche 20 bis 22,
**dadurch gekennzeichnet, dass** die Isolation (2a), zumindest teilweise, aus PVC besteht.

24. Kabelbaum (3) nach einem der Ansprüche 20 bis 23,
**dadurch gekennzeichnet, dass** die Isolation (2a), zumindest teilweise, halogenfrei ist und insbesondere aus vernetztem Polyethylen und/oder Polypropylen besteht.

25. Verwendung eines Klebebandes (1) nach einem der Ansprüche 1 bis 19 zum Ummanteln von Leitungen (2), deren Isolation (2a) einen Weichmacher enthält, der mit dem Haftklebstoff der Klebeschicht (5) des Klebebandes (1) chemisch reagiert, so dass der Weichmacher ohne Verlust der Klebkraft des Haftklebstoffs an den Haftklebstoff gebunden wird und dadurch der Durchtritt der für die Kabelisolierungen (2a) eingesetzten Weichmacher durch die Klebeschicht (5) unterbunden ist.

26. Verwendung nach Anspruch 25,
**dadurch gekennzeichnet, dass** die Isolation (2a) der Leitungen (2) einen PVC-Weichmacher, insbesondere einen Phthalsäureester, wie Di-2-(ethylhexyl)-phthalat, DEHP, oder Di-iso-undecylphthalat, DIUP, oder einen Trimellitatester, enthält und/oder halogenfrei ist.

## Claims

1. An adhesive tape (1) for sheathing elongate goods such as cable sets (2), plastics sections or the like, having a strip-shaped substrate (4) which comprises a polypropylene film (4a, 4b, 4c) and is provided at least on one side with a self-sticking adhesive layer (5) consisting of a pressure-sensitive adhesive, namely a polymer based on butyl acrylate or 2-ethylhexyl acrylate, as a result of which the pressure-sensitive adhesive has a chemical composition such that the pressure-sensitive adhesive prevents the passage of plasticisers, used for cable insulations (2a), through the adhesive layer (5), and wherein the polypropylene of the polypropylene film (4a, 4b, 4c), by the addition of additives, is modified with an ethylene-acrylate copolymer, with a polypropylene (PP-(MC)) which has been manufactured using metallocene catalysts and/or with polyethylene, so that it has a plasticiser resistance up to temperatures of 100°C.

2. An adhesive tape (1) according to claim 1, **characterised in that** the pressure-sensitive adhesive prevents the passage of PVC plasticisers, especially phthalic acid esters, such as di(2-ethylhexyl) phthalate, DEHP, or di-iso-undecyl phthalate, DIUP, or trimellitate ester.

3. An adhesive tape (1) according to claim 1 or 2, **characterised in that** the pressure-sensitive adhesive is applied as a dispersion, from solution or as a hot-melt adhesive.

4. An adhesive tape (1) according to any one of claims 1 to 3, **characterised in that** the strip-shaped substrate (4) comprises a single-layer polypropylene film (4a).

5. An adhesive tape (1) according to any one of claims 1 to 3, **characterised in that** the strip-shaped substrate (4) is a multi-layer polypropylene film (4a, 4b, 4c), especially a polypropylene film (4a, 4b, 4c) consisting of at least one polypropylene layer (4a) and at least one polyethylene layer (4b, 4c).

6. An adhesive tape (1) according to any one of claims 1 to 5, **characterised in that**, in a/the substrate (4) built up from multiple layers, especially in a substrate (4) built up from at least three layers (4a, 4b, 4c), the outer layers (4b, 4c) are formed from polypropylene.

7. An adhesive tape (1) according to any one of claims 1 to 6, **characterised in that** the polypropylene of the polypropylene film (4a, 4b, 4c) is modified by the addition of ethylene-acrylate copolymer in proportions of > 0 to 30% by mass.

8. An adhesive tape (1) according to any one of claims 1 to 7, **characterised in that** the polypropylene of the polypropylene film (4a, 4b, 4c) is modified by the addition of polypropylene (PP-(MC)) which has been manufactured using metallocene catalysts, is controlled in its tacticity and, for example, is liquid, in proportions of > 0 to 30% by mass.

9. An adhesive tape (1) according to any one of claims 1 to 8, **characterised in that** the polypropylene of the polypropylene film (4a, 4b, 4c) is modified by the addition of polyethylene in proportions of > 0 to 30% by mass.

10. An adhesive tape (1) according to any one of claims 1 to 9, **characterised in that** the substrate (4) contains flame-retardant additives such as antimony trioxide in combination with bromine or chlorine compounds, especially in proportions of 0 to 5% by mass, ammonium polyphosphate, especially in proportions of 0 to 20% by mass, and/or magnesium or aluminium hydroxide, especially in proportions of 0 to 40% by mass.

11. An adhesive tape (1) according to any one of claims 1 to 10, **characterised in that** the substrate (4) contains fillers such as talcum, chalk and/or kaolin, especially in proportions of 0 to 20% by mass in each case.

12. An adhesive tape (1) according to any one of claims 1 to 11, **characterised by** an elongation at tear of at least 450%.

13. An adhesive tape (1) according to any one of claims 1 to 12, **characterised by** a breaking strength in the range from 15 to 30 N/cm.

14. An adhesive tape (1) according to any one of claims 1 to 13, **characterised by** a Shore A hardness of less than 95.

15. An adhesive tape (1) according to any one of claims 1 to 14, **characterised by** compatibility with halogen-free insulations (2a) of lines (2) in the temperature class A to C according to LV 112, e.g. with polypropylene-insulated electrical lines (2) and/or with electrical lines (2) which have an insulation (2a) consisting of cross-linked polyethylene.

16. An adhesive tape (1) according to any one of claims 1 to 15, **characterised by** compatibility with plasticiser-containing insulations (2a) of lines (2) in the temperature classes A or B according to LV 112, e.g. with PVC-insulated electrical lines (2).

17. An adhesive tape (1) according to any one of claims 1 to 16, **characterised in that** the substrate (4) is corona-treated on its uncoated side.

18. An adhesive tape (1) according to any one of claims 1 to 17, **characterised in that** the pressure-sensitive adhesive in the adhesive layer (5) is applied with a specific basis weight of approximately 5 to 100 g/m², preferably approximately 15 to 40 g/m².

19. An adhesive tape (1) according to any one of claims 1 to 18, **characterised in that** the substrate (4) has a basis weight of 40 to 200 g/m², preferably 70 to 170 g/m².

20. A cable harness (3), comprising a plurality of lines (2), especially electrical lines, each provided with an insulation (2a), and an adhesive tape (1) according to any one of claims 1 to 19 which is wrapped around these lines (2).

21. A cable harness (3) according to claim 20, **characterised by** a temperature resistance, especially of the insulation (2a), corresponding to the temperature class A to C according to LV 112.

22. A cable harness (3) according to claim 20 or 21, **characterised in that** the insulation (2a) of the lines (2) contains a plasticiser, especially a phthalic acid ester, such as di(2-ethylhexyl) phthalate, DEHP, or di-iso-undecyl phthalate, DIUP, or a trimellitate ester.

23. A cable harness (3) according to any one of claims 20 to 22, **characterised in that** the insulation (2a) at least partly consists of PVC.

24. A cable harness (3) according to any one of claims 20 to 23, **characterised in that** the insulation (2a) is at least partly halogen-free and, in particular, consists of cross-linked polyethylene and/or polypropylene.

25. Use of an adhesive tape (1) according to any one of claims 1 to 19 for sheathing lines (2), the insulation (2a) of which contains a plasticiser which reacts chemically with the pressure-sensitive adhesive of the adhesive layer (5) of the adhesive tape (1), so that the plasticiser is bonded to the pressure-sensitive adhesive without loss of the adhesive power of the pressure-sensitive adhesive and thereby passage of the plasticisers used for the cable insulations (2a) through the adhesive layer (5) is prevented.

26. Use according to Claim 25, **characterised in that** the insulation (2a) of the lines (2) contains a PVC plasticiser, especially a phthalic acid ester, such as di(2-ethylhexyl) phthalate, DEHP, or di-iso-undecyl phthalate, DIUP, or a trimellitate ester, and/or is halogen-free.

## Revendications

1. Bande adhésive (1) destinée à l'enrobage de produits allongés, comme des câblages (2), des profils de plastique ou les similaires, avec un support en forme de bande (4) comprenant une feuille de polypropylène (4a, 4b, 4c), pourvu d'au moins un côté avec une couche adhésive autocollante (5), constituée d'un adhésif sensible à la pression, à savoir un polymère à base de butylacrylate ou de 2-éthylhexylacrylate, l'adhésif sensible à la pression présentant une composition chimique telle que l'adhésif sensible à la pression empêche l'avancée des plastifiants installés pour l'isolation des câbles (2a) à travers la couche d'adhésif (5), et dans lequel le polypropylène de la feuille de polypropylène (4a, 4b, 4c) est modifié par l'addition d'un copolymère d'acrylate d'éthylène avec un polypropylène produit avec un catalyseur métallocène (PP-(MC)) et/ou avec un polyéthylène, de sorte qu'il présente une résistance au plastifiant jusqu'à une température de 100°C.

2. Bande adhésive (1) selon la revendication 1,
**caractérisée en ce que** l'adhésif sensible à la pression empêche l'avancée de plastifiants PVC, en particulier d'esters d'acide phtalique, comme le di-2-(éthylhexyl)-phtalate, DEHP, ou de di-iso-undécylphtalate, DIUP, ou d'ester trimellitique.

3. Bande adhésive (1) selon la revendication 1 ou 2,
**caractérisée en ce que** l'adhésif sensible à la pression est fourni sous forme de dispersion, à partir de la solution ou sous forme de colle à fusion.

4. Bande adhésive (1) selon l'une quelconque des revendications 1 à 3
**caractérisée en ce que** le support en forme de bande (4) comprend une feuille de polypropylène monocouche (4a).

5. Bande adhésive (1) selon l'une quelconque des revendications 1 à 3,
**caractérisée en ce que** le support en forme de bande (4) est une feuille de polypropylène à plusieurs couches (4a, 4b, 4c), en particulier une feuille de polypropylène (4a, 4b, 4c) composée d'au moins une couche de polypropylène (4a) et au moins une couche de polyéthylène (4b, 4c).

6. Bande adhésive (1) selon l'une quelconque des revendications 1 à 5,
**caractérisée en ce que** dans l'un/le support (4) constitué de plusieurs couches, en particulier dans l'un des supports (4) constitués d'au moins trois couches (4a, 4b, 4c), les couches extérieures (4b, 4c) sont réalisées en polypropylène.

7. Bande adhésive (1) selon l'une quelconque des revendications 1 à 6,
**caractérisée en ce que** le polypropylène de la feuille de polypropylène (4a, 4b, 4c) est modifié par l'ajout de copolymère d'acrylate d'éthylène en des proportions de > 0 à 30 % mat.

8. Bande adhésive (1) selon l'une quelconque des revendications 1 à 7,
**caractérisée en ce que** le polypropylène de la feuille de polypropylène (4a, 4b, 4c) est modifié par l'ajout de polypropylènes fabriqués avec des catalyseurs métallocènes (PP-(MC)), contrôlés dans leur tacticité, par exemple fluides, en des proportions de > 0 à 30 % mat.

9. Bande adhésive (1) selon l'une quelconque des revendications 1 à 8,
**caractérisée en ce que** le polypropylène de la feuille de polypropylène (4a, 4b, 4c) est modifié par l'ajout de polyéthylènes en des proportions de > 0 à 30 % mat.

10. Bande adhésive (1) selon l'une quelconque des revendications 1 à 9,
**caractérisée en ce que** le support (4) contient des ajouts inhibant les flammes, comme du trioxyde d'antimoine en association avec des composés de brome ou chlore, en particulier en des proportions de 0 à 5 % mat., du polyphosphate d'ammonium, en particulier en des proportions de 0 à 20 % mat., et/ou d'hydroxyde de magnésium ou d'aluminium, en particulier en des proportions de 0 à 40 % mat.

11. Bande adhésive (1) selon l'une quelconque des revendications 1 à 10,
**caractérisée en ce que** le support (4) contient des matériaux de remplissage comme du talc, de la craie ou du kaolin, en particulier en des proportions de 0 à 20 % mat respectivement.

12. Bande adhésive (1) selon l'une quelconque des revendications 1 à 11,
**caractérisée par** un allongement à la rupture d'au moins 450 %.

13. Bande adhésive (1) selon l'une quelconque des revendications 1 à 12,
**caractérisée par** une résistance à la cassure dans la plage de 15 à 30 N/cm.

14. Bande adhésive (1) selon l'une quelconque des revendications 1 à 13,
**caractérisée par** une dureté Shore-A de moins de 95.

15. Bande adhésive (1) selon l'une quelconque des revendications 1 à 14,
**caractérisée par** une compatibilité avec les isolations (2a) sans halogène des câbles (2) de la catégorie de températures A à C selon la norme LV 112, par exemple avec des câbles électriques isolés en polypropylène (2) et/ou avec des câbles électriques (2) présentant une isolation (2a) composée d'un polyéthylène réticulé.

16. Bande adhésive (1) selon l'une quelconque des revendications 1 à 15,
**caractérisée par** une compatibilité avec les isolations (2a) contenant des plastifiants des câbles (2) de la catégorie de températures A ou B selon la norme LV 112, par exemple avec des câbles électriques isolés en PVC (2).

17. Bande adhésive (1) selon l'une quelconque des revendications 1 à 16,
**caractérisée en ce que** le support (4) est traité par effet corona sur son côté qui n'est pas recouvert.

18. Bande adhésive (1) selon l'une quelconque des revendications 1 à 17,
**caractérisée en ce que** l'adhésif sensible à la pression dans la couche adhésive (5) est chargé en surface d'un poids spécifique d'environ 5 à 100 g/m², de préférence d'environ 15 à 40 g/m².

19. Bande adhésive (1) selon l'une quelconque des revendications 1 à 18,
**caractérisée en ce que** le support (4) présente un poids en surface de 40 à 200 g/m², de préférence de 70 à 170 g/m².

20. Faisceau de câbles (3), comprenant plusieurs câbles (2), pourvus à chaque fois d'une isolation (2a), en particulier électrique et une bande adhésive (1), selon l'une des revendications 1 à 19, avec laquelle ces câbles (2) sont enveloppés.

21. Faisceau de câbles (3) selon la revendication 20,
**caractérisé par** une constance thermique, en particulier de l'isolation (2a) conformément à la catégorie de températures A à C selon la norme LV 112.

22. Faisceau de câbles (3) selon la revendication 20 ou 21,
**caractérisé en ce que** l'isolation (2a) des câbles (2) contient un plastifiant, en particulier un ester d'acide phtalique, comme du di-2-(éthylhexyl)-phtalate, DEHP, ou du di-iso-undécylphtalate, Di-UP, ou un ester trimellitique.

23. Faisceau de câbles (3) selon l'une quelconque des revendications 20 à 22,
**caractérisé en ce que** l'isolation (2a) est constituée, au moins en partie, de PVC.

24. Faisceau de câbles (3) selon l'une quelconque des revendications 20 à 23,
**caractérisé en ce que** l'isolation (2a) est, au moins en partie, sans halogène et est en particulier constituée de polyéthylènes et/ou polypropylènes réticulés.

25. Utilisation d'une bande adhésive (1) selon l'une quelconque des revendications 1 à 19 destinée à l'enrobage de câbles (2), dont l'isolation (2a) contient un plastifiant, qui réagit chimiquement avec l'adhésif sensible à la pression de la couche d'adhésif (5) de la bande adhésive (1), de sorte que le plastifiant soit lié à l'adhésif sensible à la pression sans perte de force adhésive de l'adhésif sensible à la pression, et de ce fait l'avancée du plastifiant installé pour l'isolation des câbles (2a) est empêchée dans la couche d'adhésif (5).

26. Utilisation selon la revendication 25,
**caractérisée en ce que** l'isolation (2a) des câbles (2) contient un plastifiant PVC, en particulier un ester d'acide phtalique, comme du di-2-(éthylhexyl)-phtalate, DEHP, ou du di-iso-undécylphtalate, DIUP, ou un ester trimellitique et/ou est sans halogène.
